# EUROPEAN PATENT APPLICATION

(11) **EP 4 632 680 A1**
(43) Date of publication of application: **15.10.2025**
(21) Application number: 25164550.3
(22) Date of filing: 18.03.2025
(51) Int. Cl.: G06T 13/60

(54) **IMAGE PROCESSING**

(30) Priority: 11.04.2024 GB 202405156
(71) Applicant: Sony Interactive Entertainment Inc., Tokyo 108-0075 (JP)
(72) Inventor: VILLANUEVA-BARREIRO, Marina, London, W1F 7LP (GB); SWANN, Andrew, London, W1F 7LP (GB); CRACIUN, Cristian, London, W1F 7LP (GB); PANESAR, Pritpal Singh, London, W1F 7LP (GB); NEDELCU, Radu-Andrei, London, W1F 7LP (GB); SUNDARAM, Chockalingam Ravi, London, W1F 7LP (GB); MOTILLA, Daniel Montero, London, W1F 7LP (GB)
(74) Representative: D Young & Co LLP

(57) **Abstract**

A data processing apparatus comprises sampling circuitry to sample computer-generated volumetric effect data for a virtual scene and generate an initial 2D volumetric effect image in dependence on a set of sampling results obtained for the computer-generated volumetric effect data; super resolution circuitry to generate a higher resolution 2D volumetric effect image in dependence on the initial 2D volumetric effect image, wherein the super resolution circuitry is configured to input the initial 2D volumetric effect image to a machine learning model trained for performing image super-resolution, the higher resolution 2D volumetric effect image having a higher image resolution than the initial 2D volumetric effect image; and image processing circuity to generate one or more display images for the virtual scene, wherein the image processing circuity is configured to generate one or more of the display images using the higher resolution 2D volumetric effect image.

## Description

### Field of the Disclosure

The present disclosure relates to the field of processing data. In particular, the present disclosure relates to apparatus, systems and methods for processing image data.

### Description of the Prior Art

The "background" description provided herein is for the purpose of generally presenting the context of the disclosure. Work of the presently named inventors, to the extent it is described in this background section, as well as aspects of the description which may not otherwise qualify as prior art at the time of filing, are neither expressly or impliedly admitted as prior against the present disclosure.

The speed and realism with which a scene can be rendered is a key consideration in the field of computer graphics processing. When rendering images for virtual environments, volumetric effects such as fog, smoke, steam and so on may be rendered. Video graphics applications, such as video games, television shows and movies, sometimes use volumetric effects to model smoke, fog, or other fluid or particle interactions such as the flow of water or sand, or an avalanche or rockslide, or fire.

Rendering of fog, for example, typically requires a volumetric rendering approach involving simulation of a three-dimensional fog and sampling of the fog simulation followed by performing rendering operations using results of the sampling. Such volumetric effects may typically be part of a complex rendering pipeline, which may potentially be responsive to a topology of a rendered environment, the textures / colours of that environment, and the lighting of that environment, as well as the properties of the volumetric material itself. These factors may be combined within the operations for rendering the volumetric effect, and this can result in a significant computational cost to the system.

In practice, the computational load associated with volumetric rendering may result in slow production of a TV show or film, or in adversely reducing frame rates. One solution to this problem is to model volumetric effects at a much lower resolution than a rendered image, to thereby reduce the computational overhead. The lower resolution information can then be blended with results generated for a number of frames (e.g. ten previous frames) to apply a smoothing and avoid potentially blocky and discontinuous regions which may have a flickering appearance. However, this sacrifices temporal resolution in order to recover an illusion of spatial resolution.

More generally, rendering of volumetric effects can potentially require burdensome processing. For interactive applications, such as video game applications and other similar applications, the associated time and processing constraints can present difficulties in rendering volumetric effects with acceptable quality.

It is in this context that the present disclosure arises.

Various aspects and features of the present disclosure are defined in the appended claims and within the text of the accompanying description. Example embodiments include at least a data processing apparatus, a method, a computer program and a machine-readable, non-transitory storage medium which stores such a computer program.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
Figure 1 is a schematic diagram illustrating an example of an entertainment device;
Figure 2a is a schematic diagram illustrating an example of a method for rendering images;
Figure 2b is a schematic diagram illustrating an example of a method for rendering a volumetric effect;
Figure 3 is a schematic diagram illustrating a data processing apparatus in accordance with embodiments of the disclosure;
Figure 4 is a schematic diagram illustrating an example of a view frustum voxel grid;
Figures 5a and 5b are schematic diagrams illustrating machine learning models in accordance with some embodiments of the disclosure;
Figure 6 is a schematic diagram illustrating a data processing apparatus in accordance with some embodiments of the disclosure; and
Figures 7 and 8 are schematic flowcharts illustrating methods for generating training data;
Figures 9 and 10 are schematic diagram illustrating data processing apparatus for generating training data; and
Figure 11 is a schematic flowchart illustrating a method.

### DESCRIPTION OF THE EMBODIMENTS

In the following description, a number of specific details are presented in order to provide a thorough understanding of the embodiments of the present invention. It will be apparent, however, to a person skilled in the art that these specific details need not be employed to practice the present invention. Conversely, specific details known to the person skilled in the art are omitted for the purposes of clarity where appropriate.

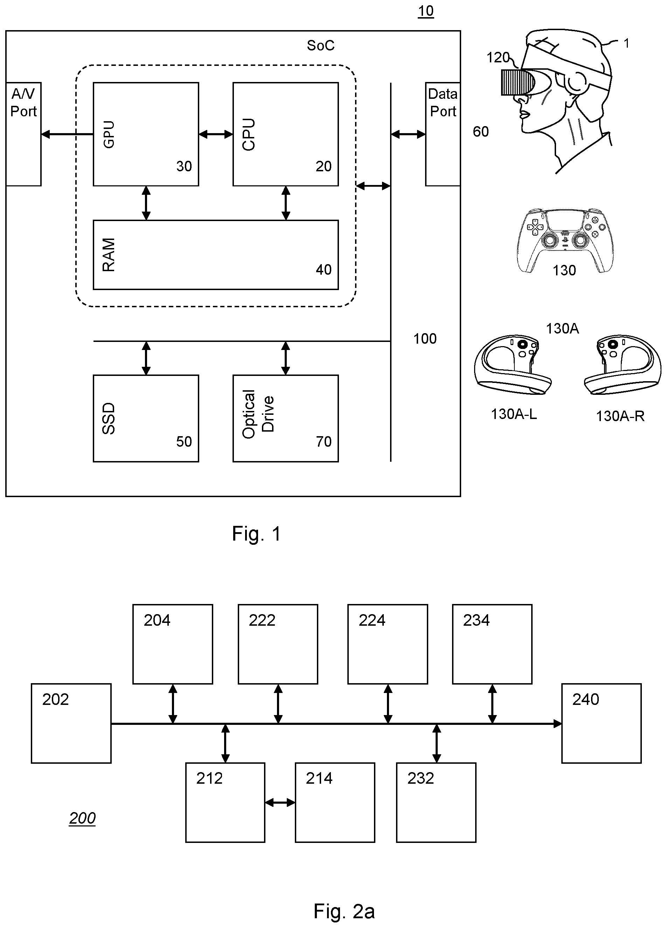

Referring now to the drawings, wherein like reference numerals designate identical or corresponding parts, Figure 1 shows an example of an entertainment device 10 which may be a computer or video game console, for example.

The entertainment device 10 comprises a central processor 20. The central processor 20 may be a single or multi core processor. The entertainment device also comprises a graphical processing unit or GPU 30. The GPU can be physically separate to the CPU, or integrated with the CPU as a system on a chip (SoC).

The GPU, optionally in conjunction with the CPU, may process data and generate video images (image data) and optionally audio for output via an AV output. Optionally, the audio may be generated in conjunction with or instead by an audio processor (not shown).

The video and optionally the audio may be presented to a television or other similar device. Where supported by the television, the video may be stereoscopic. The audio may be presented to a home cinema system in one of a number of formats such as stereo, 5.1 surround sound or 7.1 surround sound. Video and audio may likewise be presented to a head mounted display unit 120 worn by a user 1.

The entertainment device also comprises RAM 40, and may have separate RAM for each of the CPU and GPU, and/or may have shared RAM. The or each RAM can be physically separate, or integrated as part of an SoC. Further storage is provided by a disk 50, either as an external or internal hard drive, or as an external solid state drive, or an internal solid state drive.

The entertainment device may transmit or receive data via one or more data ports 60, such as a USB port, Ethernet^{®} port, Wi-Fi^{®} port, Bluetooth^{®} port or similar, as appropriate. It may also optionally receive data via an optical drive 70.

Audio/visual outputs from the entertainment device are typically provided through one or more A/V ports 90, or through one or more of the wired or wireless data ports 60.

An example of a device for displaying images output by the entertainment device is the head mounted display 'HMD' 120 worn by the user 1. The images output by the entertainment device may be displayed using various other devices - e.g. using a conventional television display connected to A/V ports 90.

Where components are not integrated, they may be connected as appropriate either by a dedicated data link or via a bus 100.

Interaction with the device is typically provided using one or more handheld controllers 130, 130A and/or one or more VR controllers 130A-L, R in the case of the HMD. The user typically interacts with the system, and any content displayed by, or virtual environment rendered by the system, by providing inputs via the handheld controllers 130, 130A. For example, when playing a game, the user may navigate around the game virtual environment by providing inputs using the handheld controllers 130, 130A.

Figure 1 therefore provides an example of a data processing apparatus suitable for executing an application such as a video game and generating images for the video game for display. Images may be output via a display device such as a television or other similar monitor and/or an HMD (e.g. HMD 120). More generally, user inputs can be received by the data processing apparatus and an instance of a video game can be executed accordingly with images being rendered for display to the user.

Rendering operations are typically performed by rendering circuitry (e.g. GPU and/or CPU) as part of an execution of an application such as computer games or other similar applications to render image frames for display. Rendering operations typically comprise processing of model data or other predefined graphical data to render data for display as an image frame.

A rendering process performed for a given image frame may comprise a number of rendering passes for obtaining different rendering effects for the rendered image frame. Examples of rendering passes for rendering a scene may include rendering a shadow map, rendering opaque geometries, rendering transparent geometries, rendering deferred lighting, rendering depth-of-field effects, anti-aliasing, rendering ambient occlusions, and scaling among others.

Figure 2a schematically illustrates an example method of rendering images for display using a rendering pipeline 200. An entertainment device such as that discussed with respect to Figure 1 may for example implement such a rendering pipeline. The rendering pipeline 200 takes data 202 regarding what is visible in a scene and if necessary performs a so-called z-cull 204 to remove unnecessary elements. Initial texture/material and light map data are assembled 212, and static shadows 214 are computed as needed. Dynamic shadows 222 are then computed. Reflections 224 are then also computed.

At this point, there is a basic representation of the scene, and additional elements 232 can be included such as translucency effects, and/or volumetric effects such as those discussed herein. Then any post-processing 234 such as tone mapping, depth of field, or camera effects can be applied, to produce the final rendered frame 240.

For generating volumetric effects, existing rendering pipeline techniques may generally use a volumetric simulation stage followed by a stage of sampling that samples the volumetric simulation. Rendering of volumetric effects, such as fog, smoke, steam, fire and so on typically require volumetric rendering approaches. The use of volumetric rendering for a scene may be desired for various reasons. However, rendering of scenes with realistic volumetric effects can be computationally expensive.

For convenience, the description herein may refer to 'fog' as a shorthand example of a volumetric effect, but it will be appreciated that the disclosure and techniques herein are not limited to fog, and may comprise for example other volumetric physical simulations, such as those of smoke, water, sand and other particulates such as in an avalanche or landslide, and fire.

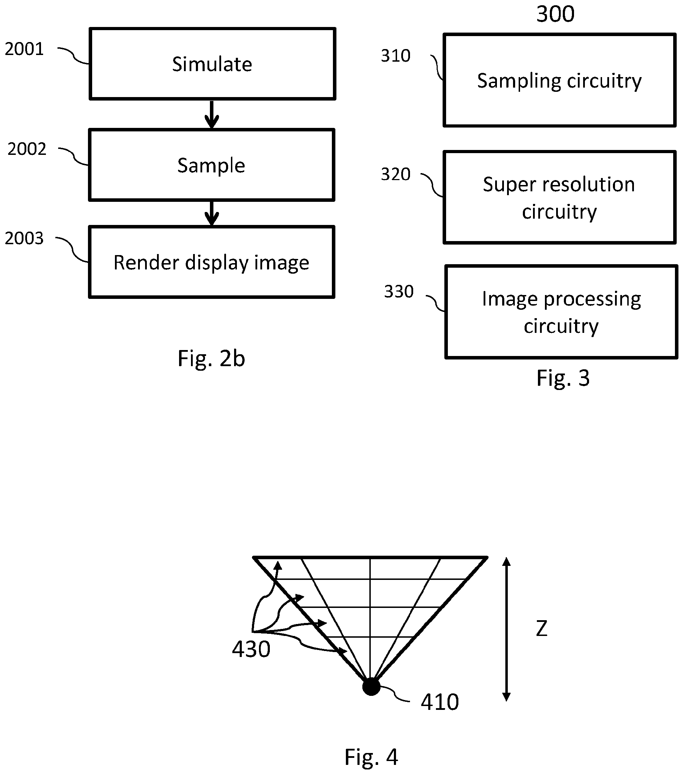

Figure 2b schematically illustrates an example method for rendering images with a volumetric effect, such as a volumetric fog effect. The method comprises: performing (at step 2001) a volumetric simulation (e.g. volumetric fog simulation); performing sampling calculations (at a step 2002) to sample the volumetric simulation and obtain a set of sampling results (e.g. stored as a 3D texture); and rendering (at a step 2003) display images to include a volumetric effect based on the set of sampling results. The step 2003 may comprise various render passes for providing various rendering effects, in which a volumetric effect rendering pass (e.g. volumetric fog rendering pass) can be used.

The volumetric simulation may use any suitable algorithm. For example, fog particles may be simulated or instead a density of fog may be simulated. Interaction of light with the fog can be modelled (e.g. transmission, absorption and scattering of light). The volumetric simulation may be performed only for a portion of a scene that is visible (e.g. a portion of a game world currently within a field of view of a virtual camera). The sampling calculation then samples the volumetric dataset with the results being stored, for example as a 3D texture. Rendering operations can thus be performed to render one or more display images, in which the rendering operations use the results of the sampling and the display images depict the scene with a volumetric effect (e.g. volumetric fog effect).

Figure 3 schematically illustrates a data processing apparatus 300 in accordance with embodiments of the disclosure. The data processing apparatus 300 may be provided as part of a user device (such as the entertainment device of Figure 1) and/or as part of a server device. The data processing apparatus 300 may be implemented in a distributed manner using two or more respective processing devices that communicate via a wired and/or wireless communications link. The data processing apparatus 300 may be implemented as a special purpose hardware device or a general purpose hardware device operating under suitable software instruction. The data processing apparatus 300 may be implemented using any suitable combination of hardware and software.

The data processing apparatus 300 comprises sampling circuitry 310, super resolution circuitry 320 and image processing circuitry 330. The operations discussed in relation to the sampling circuitry 310, super resolution circuitry 320 and image processing circuitry 330 may be implemented using the CPU 20 and/or GPU 30, for example.

The sampling circuitry 310 is configured to sample computer-generated volumetric effect data for a virtual scene. The computer-generated volumetric effect data may have been generated using any suitable simulation algorithm. In some cases, the data processing apparatus 300 may comprise simulation circuitry for generating the volumetric effect data. Alternatively or in addition, the data processing apparatus 300 may comprise storage circuitry (e.g. any suitable volatile and/or non-volatile memory) configured to store pre-generated volumetric effect data. For example, volumetric effect data may be generated in advance by another data processing apparatus and downloaded to the data processing apparatus 300. In some examples, volumetric effect data may be generated by another data processing apparatus and streamed (e.g. live streamed) to the data processing apparatus 300 for sampling thereof.

Therefore, the data processing apparatus 300 may in some cases be operable to generate the volumetric effect data. The volumetric effect data may relate to a volumetric effect such as one of a volumetric fog effect, volumetric smoke effect, volumetric water effect or a volumetric fire effect. For example, the volumetric effect data may be generated by a rendering pipeline for a video game or game engine. The Unreal ^{®} game engine is an example of a suitable game engine that can be used for simulating such volumetric effect data. The volumetric effect data can be simulated both spatially and temporally so that the volumetric effect data varies over time and sampling with respect to the volumetric effect data can be performed to sample the volumetric effect data at different points in time (e.g. from frame to frame). For example, in the case of a simulation of volumetric fog effect data, a 3D simulation of respective particles and/or fog density for a portion of a virtual scene within a field of view of a virtual camera may be calculated at various times.

The sampling circuitry 310 is configured to sample the volumetric effect data (e.g. volumetric fog effect data) to obtain a set of sampling results. The sampling circuitry 310 performs a three-dimensional (3D) sampling calculation for sampling the volumetric effect data. Generally, the 3D volumetric effect data is sampled using a 3D sampling scheme to obtain a set of 3D sampling results. In some embodiments of the disclosure, a 3D voxel grid with voxels of a uniform shape and volume may be used for the sampling. In other embodiments of the disclosure, a view frustum voxel grid (also referred to as a froxel grid) comprising frustum voxels may be used for the sampling. The sampling circuitry 310 can sample the volumetric effect data according to a frame rate to periodically obtain a set of sample results for the volumetric effect data.

Figure 4 schematically illustrates an example of a plan view of a view frustum voxel grid (froxel grid). In the example shown, the frustum voxels are aligned with a virtual camera viewpoint 410 for a virtual scene. The use of such a froxel grid can be beneficial in that frustum-shaped voxels contribute to achieving better spatial resolution for part of a virtual scene closer to the virtual camera position. The example in Figure 4 shows a view frustum voxel grid including four depth slices in the depth (Z) axis for purposes of explanation. In some examples, the sampling circuitry 310 may sample volumetric effect data using a froxel grid having dimensions of 64x64x128 (i.e. 2D slices each of 64x64 with 128 slices along the depth axis), or 80x45x64 or 160x90x128 for a more typical 16:9 aspect ratio image. The sampling circuitry 310 may use any of a 3D voxel grid (with each voxel having a same size and shape) and a 3D view frustum voxel grid for the sampling calculation. The 3D view frustum voxel grid comprises frustum voxels which fit within the view frustum of the virtual camera, as shown in Figure 4.

Existing rendering pipeline techniques typically use a relatively low resolution sampling calculation for sampling volumetric effect data due to factors such as computation cost and/or processing time constraints. For example, whilst sampling using a 640x390x128 froxel grid may be desirable, a data size of approximately 250 MB for the resulting samples and the computational overhead associated with such a sampling calculation can be prohibitive and therefore much lower sampling resolutions (e.g. 64x64x128) may typically be used. As a consequence of this, for existing rendering pipelines, the subsequently rendered volumetric effect is typically of low quality with poor temporal coherence.

Moreover, sampling a potentially high resolution volumetric simulation (e.g. volumetric fog simulation) using a relatively coarse voxel grid or froxel grid, can give rise to a set of sampling results providing a blocky and potentially flickering appearance for the volumetric effect data from one display image to the next. One potential solution to this issue is to blend a low resolution voxel grid (or more specifically, the set of sampling results for that voxel grid) with one or more previous low resolution voxel grids. For example, 90% of the samples from a previous low resolution voxel grid may be blended with the samples for a current low resolution voxel grid. This can potentially mitigate blocky and flickering appearances of the volumetric effect in the display images by effectively smoothing the results. However, such blending is at the cost of temporal resolution and provides a smeary and low quality volumetric effect.

In embodiments of the disclosure, the sampling circuitry 310 obtains a set of sampling results for the volumetric effect data and generates an initial 2D volumetric effect image in dependence on the set of sampling results. The initial 2D volumetric effect image is generally a 2D representation of the 3D sampling results obtained using the 3D voxel grid (e.g. froxel grid). The 2D volumetric effect image is generally obtained as a projection of the sampling results onto a 2D image plane for a virtual camera viewpoint (such as the virtual camera viewpoint 410). For example, sample results corresponding to a same voxel for the different depth slices can be combined to obtain a respective result for a respective pixel in the 2D volumetric effect image. For example, with reference to Figure 4 sample results for each of the frustum voxels indicated by the arrows 430 may be combined to calculate a respective result for a respective pixel in the 2D volumetric effect image. In other words, sample results for each voxel/froxel in a same column of voxels/froxels extending from the virtual camera viewpoint 410 in the depth axes can be combined to obtain a respective pixel value in the initial 2D volumetric effect image. For example, a weighting may be used to combine the sample results, with larger weightings being used for frustum voxels closer to the virtual viewpoint 410 and smaller weightings being used for frustum voxels further from the virtual viewpoint 410.

Hence, the sampling circuitry 310 is operable to obtain a set of sampling results by sampling the volumetric effect data using a 3D voxel grid or 3D froxel grid. The set of sampling results may be stored as a 3D array (e.g. WxHxD) for which each entry may be indicative of at least a grayscale value or colour value (e.g. RGB format). Hence, in some examples a respective sample of the set of sampling results may specify a colour value. For example, for a simulation of a volumetric fog, the sampling may result in obtaining a set of sampling results indicative of colours that are generally white (e.g. grey, off-white and so on) for respective voxels (or frustum voxels). In some embodiments of the disclosure, the sampling by the sampling circuitry 310 may obtain sampling results indicative of both colour and transparency (e.g. a respective sample result may be indicative of an RGBA value, where A is an alpha value between 1 and 0 for indicating transparency).

More generally, a voxel or froxel grid having dimensions of 64x64x128 (i.e. 2D slices each of 64x64 with 128 slices in the depth axis) may be used to generate a 2D volumetric effect image of 64x64 pixels. Whilst it is possible for such a 2D volumetric effect image to be used by the image processing circuitry 330 for generating one or more display images for the virtual scene, the resulting display images can be expected to include a low quality volumetric effect, for the reasons given previously.

The data processing apparatus 300 comprises the super resolution circuitry 320 for generating a higher resolution 2D volumetric effect image in dependence on the initial 2D volumetric effect image. The super resolution circuitry 320 is configured to input the initial 2D volumetric effect image to a machine learning (ML) model that has been trained to perform image super resolution. In some examples, one or more deep-learning based image super resolution machine learning models may be used by the super resolution circuitry 320 for this purpose. For example, an existing image super resolution machine learning model may be used. In some embodiments of the disclosure, the super resolution circuitry 320 may use a machine learning model that has been trained using training data comprising pairs of lower resolution and higher resolution 2D volumetric effect images. This is discussed in more detail later.

The super resolution circuitry 320 generates the higher resolution 2D volumetric effect image using deep-learning based image super resolution. The higher resolution 2D volumetric effect image thus has increased image resolution relative to the initial 2D volumetric effect image and can be used to provide a higher quality fog effect relative to that of the initial 2D volumetric effect image. Rather than using a high resolution sampling for sampling the computer-generated volumetric effect data and generating a high resolution 2D volumetric effect image (which is one possibility), the data processing apparatus 300 can sample using a lower resolution sampling and use the machine learning model to generate a higher resolution 2D volumetric effect image so as to effectively allow recovery of information. For example, whereas the initial 2D volumetric effect image may have an image resolution of 64x64 (or 128x128 or 160x190, for example), the higher resolution 2D volumetric effect image may have an image resolution of 256x256 (e.g. 4x upsampling in the spatial dimensions of width and height) or greater, such as 640x390.

The image processing circuitry 330 is configured to generate one or more display images for the virtual scene, in which the image processing circuity 330 is configured to generate one or more of the display images using the higher resolution 2D volumetric effect image generated by the super resolution circuitry 320. In this way, the data processing apparatus 300 can sample the computer-generated volumetric effect data using a potentially low resolution sampling calculating (for example, sampling using a 64x64x128 froxel grid) and upsample the initial 2D volumetric effect image to obtain a higher resolution 2D volumetric effect image for use by the image processing circuitry 330 for generating one or more display images so that a quality of the volumetric effect in the display images is improved relative to a comparative case in which the initial 2D volumetric effect image is instead used by the image processing circuitry 330.

The data processing apparatus 300 thus generates one or more display images (also referred to as content images) for the virtual scene using the higher resolution 2D volumetric effect image. The display images may correspond to any suitable content such as a video game or other similar interactive application. The data processing apparatus 300 can generate the display images according to any suitable frame rate and any suitable image resolution. In some examples, display images may be generated with a frame rate of 30 Hz, 60 Hz or 120Hz or any frame rate between these possibilities. The display images may relate to 2D images suitable for being displayed by a television or other similar monitor device. Alternatively, the display images may relate to stereoscopic images for being displayed by an HMD. References herein to display images refer to any of 2D images and stereoscopic images.

The data processing apparatus 300 is thus operable to generate a plurality of display images for visually depicting a virtual scene (computer-generated environment). The virtual scene may correspond to a game world for a video game or other similar scene. In some examples, the virtual scene may correspond to a virtual reality (VR) environment which can be explored and interacted with by a user viewing the content images via a display device such as a head mountable displayed (HMD). Hence, in some cases the image processing circuitry 330 may be configured to generate display images depicting a virtual reality (VR) environment for display by an HMD. The image processing circuitry 330 generates display images comprising pixel values which may be RGB pixel values. For example, the display images may be 24-bit RGB images such that each pixel value has 24-bits with 8-bits per colour channel. Alternatively, another colour space may be used, such as YCbCr colour space.

The image processing circuitry 330 can be configured to generate display images in accordance with a virtual viewpoint position and/or orientation that may be controlled by a user. For example, a user may control a virtual viewpoint with respect to a virtual environment using one or more of a handheld controller device (e.g. 130, 130A) and/or a tracked position and/or orientation of an HMD (e.g. 120). The image processing circuitry 330 can thus generate display images according to a user-controlled viewpoint. For example, the display images may have a viewpoint such as a first person viewpoint or a third person viewpoint for a virtual entity (e.g. virtual avatar or virtual vehicle) controlled by a user.

More generally, the image processing circuitry 330 can be configured to generate display images in accordance with virtual viewpoint information, in which the virtual viewpoint information is indicative of at least one of a position and an orientation for a virtual viewpoint within a virtual environment. In some embodiments of the disclosure, the data processing apparatus 300 is configured to receive user input information for controlling at least one of a position and an orientation of the virtual viewpoint within the virtual environment. For example, the data processing apparatus may maintain virtual viewpoint information indicative of a position and orientation for a virtual viewpoint and update the virtual viewpoint information in response to user input information received from one or more user input devices, such as a handheld controller and/or an HMD. Hence, the display images may in some cases be generated to provide a viewpoint with respect to a virtual environment for allowing a user to explore and move around the virtual environment.

The techniques of the present disclosure can allow for integration with existing graphics processing pipelines to allow computationally efficient generation of output images with volumetric effects (e.g. fog effects). For example, some existing graphics processing pipelines may perform sampling and rendering (e.g. as discussed with reference to Figure 2b) and the techniques of the present disclosure can introduce the super resolution circuitry 320 to generate a higher resolution 2D volumetric effect image for generating one or more display images.

In some embodiments of the disclosure, the computer-generated volumetric effect data comprises one or more from the list consisting of: volumetric fog effect data; volumetric smoke effect data; volumetric water effect data; and volumetric fire effect data. The volumetric effect data may be generated using any suitable simulation algorithm and may in some cases be generated by a game engine (e.g. the Unreal^{®} game engine is suitable for simulating such data). The computer-generated volumetric effect data can thus be sampled to obtain a set of sampling results from which an initial 2D volumetric effect image can be generated. Hence, in some embodiments of the disclosure, the initial 2D volumetric effect image may comprise one of more of a fog effect, smoke effect, water effect and/or fire effect.

In some embodiments of the disclosure, computer-generated volumetric effect data comprises one of: volumetric fog effect data; volumetric smoke effect data; volumetric water effect data; and volumetric fire effect data. Hence, the initial 2D volumetric effect image may be one of a 2D volumetric fog effect image (or also referred to as a fog image), a 2D volumetric smoke effect image (or also referred to as a smoke image), a 2D volumetric water effect image (or also referred to as a water image, and a 2D volumetric fire effect image (or also referred to as a fire image). A 2D volumetric fog effect image may comprise pixel values each indicative of colour and transparency (e.g. RGBA) for a respective pixel.

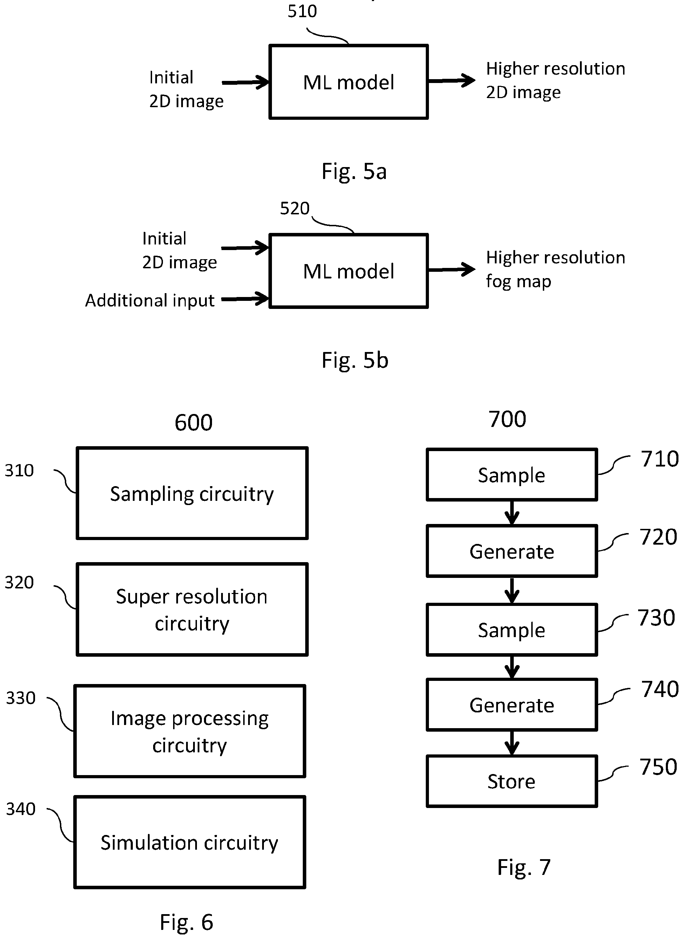

In some embodiments of the disclosure: the sampling circuitry 310 is configured to sample computer-generated volumetric fog effect data for a virtual scene and generate an initial 2D volumetric fog effect image in dependence on a set of sampling results obtained for the computer-generated volumetric fog effect data; the super resolution circuitry 320 is configured to generate a higher resolution 2D volumetric fog effect image in dependence on the initial 2D volumetric fog effect image, in which the super resolution circuitry 320 is configured to input the initial 2D volumetric fog effect image to a machine learning model (e.g. ML model 510 or ML model 520 to be discussed with respect to Figures 5a and 5b) trained for performing image super-resolution, the higher resolution 2D volumetric fog effect image having a higher image resolution than the initial 2D volumetric fog effect image; and the image processing circuity 330 is configured to generate one or more display images for the virtual scene, in which the image processing circuity 330 is configured to generate one or more of the display images using the higher resolution 2D volumetric fog effect image. In this way, one or more display images can be generated to include a higher quality (higher resolution and improved temporal coherence) fog effect. Whilst the above discussion refers to volumetric fog, it will be appreciated that the sampling circuitry 310, super resolution circuitry 320 and image processing circuitry 330 may operate similarly for generating one or more display images with any of a smoke effect, water effect and fire effect.

Figure 5a schematically illustrates an example of a machine learning model 510 trained to receive an input 2D image and output a higher resolution 2D image comprising a larger number of respective pixel values. The super resolution circuitry 320 may input an initial 2D volumetric effect image to the ML model 510, in which the ML model 510 is trained for performing image super-resolution. The ML model 510 may be an existing ML model for performing image super resolution. The super resolution circuitry 320 may input only an initial 2D volumetric effect image to the ML model 510 to generate a higher resolution 2D volumetric effect image.

In some embodiments of the disclosure, a machine learning model (e.g. ML model 510) is trained to receive an initial 2D volumetric effect image and increase image resolution for the initial 2D volumetric effect image so as to output a higher resolution image with uniform image resolution. For example, the initial 2D volumetric effect image may be a 64x64 image and the ML model 510 may generate a higher resolution image having a same aspect ratio, such as a 256x256 image. Hence, image resolution may be increased uniformly.

In some embodiments of the disclosure, a machine learning model (e.g. ML model 510) is trained to increase image resolution for one or more portions of an initial 2D volumetric effect image. The machine learning model can perform upsampling with respect to an input 2D volumetric effect image to increase image resolution for a portion (i.e. some) of the input 2D volumetric effect image. Moreover, upsampling may be performed to upsample a first portion of the input 2D volumetric effect image whilst not performing upsampling for a second portion (or performing upsampling for the second portion with a lower upsampling factor- e.g. 2x upsampling for one portion and 4x upsampling for another portion). Hence, whilst the initial 2D volumetric effect image may have a uniform image resolution, the ML model may generate a 2D volumetric effect image having at least a first image portion with a first image resolution (e.g. X pixels per unit area) and a second image portion with a second image resolution (e.g. Y pixels per unit area) where X and Y are different. For example, the first image portion may have been upsampled by a factor of N relative to the corresponding image portion in the initial 2D volumetric effect image (e.g. N may be a value of 2, 4 or 10 for example), and the second image portion may not have been upsampled and may have a same image resolution as the corresponding image portion in the initial 2D volumetric effect image.

Hence, the super resolution circuitry 320 may be operable to generate a 2D volumetric effect image comprising a first image portion having a first image resolution and a second image portion having a second image resolution different from the first image resolution. More generally, the super resolution circuitry 320 may generate a 2D volumetric effect image having a plurality of image portions having a plurality of different image resolutions.

In some embodiments of the disclosure, a predetermined setting and/or one or more properties associated with an initial 2D volumetric effect image may be used to determine one or more image portions for which image resolution is to be increased. Any of the super resolution circuitry 220 and the ML model (e.g. ML model 510) may determine one or more image portions in this way. For example, the super resolution circuitry 220 may use one or more predetermined settings and/or detect one or more of the properties and provide an input to the ML model. Alternatively or in addition, the ML model (e.g. ML model 510) may use one or more predetermined settings and/or detect one or more of the properties.

Image resolution may be increased for one or more portions of an initial 2D volumetric effect image based on a predetermined setting specifying one or more predetermined portions of the initial 2D volumetric effect image. For example, one or more central portions of the initial 2D volumetric effect image may be increased in resolution whereas one or more peripheral portions of the initial 2D volumetric effect image may be unchanged (or increased in resolution using a lower upsampling factor). For example, a plurality of same sized regions (e.g. square or rectangular regions) may be defined and one or more regions within a predetermined distance of a central coordinate (e.g. H/2, W/2, where H and W are height and width of the image, respectively) may be determined.

In some examples, a predetermined setting may specify a central portion for an image (and optionally a peripheral portion). The central portion can be assumed to be of higher relevance for a viewing user than the peripheral portion. Processing (image super resolution processing) can thus be performed to increase image resolution for the central portion. For example, the central portion may be a circular portion centred on a central coordinate for the initial 2D volumetric effect image and having a predetermined radius. The machine learning model may increase image resolution for the central portion of the initial 2D volumetric effect image whilst leaving a peripheral portion unchanged (or upsampling the peripheral portion by a lower upsampling factor than that used for the central portion).

Hence, the super resolution circuitry 320 may input an initial 2D volumetric effect image to a machine learning model that is trained to select one or more portions of the initial 2D volumetric effect image and increase image resolution for the one or more selected portions.

As explained above, the sampling circuitry 310 generates an initial 2D volumetric effect image in dependence on a set of sampling results obtained for the sampling calculation for the computer-generated volumetric effect data. In some cases, some portions of the initial 2D volumetric effect image may be "empty" (i.e. do not include data for the volumetric effect), whereas other portions may include data for the volumetric effect. For example, the initial 2D volumetric effect image may include a volumetric effect in a lower half (e.g. pixel values associated with volumetric fog) with no volumetric effect in an upper half of the image. For example, a low lying fog may be simulated and sampled to obtain such a 2D volumetric effect image. More generally, one or more first portions of an initial 2D volumetric effect image may comprise pixel values associated with a volumetric effect, whereas one or more second portions of an initial 2D volumetric effect image may comprise empty pixel values. The ML model 510 can increase image resolution for the one or more first portions. The one or more second portions may be disregarded.

Hence more generally, in some embodiments of the disclosure a machine learning model is trained to increase image resolution for a given portion of an initial 2D volumetric effect image in dependence on whether the given portion includes pixel data associated with the volumetric effect. For example, for a first portion including pixel data associated with a volumetric fog effect (e.g. pixel values indicative of at least colour and optionally transparency), the machine learning model can increase image resolution for the first portion, whereas for a second portion without pixel data associated with the volumetric fog effect (e.g. null pixel values), the machine learning model can ignore the second portion.

In some examples, detection of a given image portion that includes pixel data associated with the volumetric effect may be performed using a predetermined block size (e.g. a block of MxM pixels, such as 4x4 pixel blocks or 8x8 pixel blocks). The image may be segmented into a number of pixel blocks each of a same predetermined size. In response to detection of at least one pixel in a pixel block having pixel data associated with the volumetric effect, the pixel block can be defined as an active pixel block for inclusion in the given image portion that is to be increased in image resolution. In this way, a given image portion comprising a plurality of pixel blocks each having at least one pixel having pixel data associated with the volumetric effect can be increased in image resolution. This can be useful in that parts of the image including an edge of the volumetric effect (i.e. a boundary where the pixels transition from the volumetric effect to null pixels) can be increased in image resolution for providing detail for boundaries of the volumetric effect.

In some embodiments of the disclosure, the super resolution circuitry 320 is configured to provide an additional input (in addition to the initial 2D volumetric effect image) to a machine learning model for indicating one or more image regions of the initial 2D volumetric effect image to be targeted for super resolution processing by the machine learning model. An additional input can be provided to a machine learning model to allow targeted upsampling for one or more portions of the initial 2D volumetric effect image. Figure 5b schematically illustrates an example of an ML model 520 trained to receive a 2D image and also an additional input. The machine learning model 520 is trained to output a higher resolution 2D image comprising a larger number of respective pixel values, in which one or more image portions have a higher image resolution than one or more other image portions having a lower image resolution. The super resolution circuitry 320 may comprise one or both of the ML models 510 and 520.

The additional input may potentially take a number of different forms.

In some embodiments of the disclosure, the super resolution circuitry 320 is configured to input target information indicative of one or more target image portions to the machine learning model 520. The machine learning model thus increases image resolution for one or more portions of the initial 2D volumetric effect image in dependence on the target information. In this case, the additional input may explicitly indicate an image region with respect to the input 2D volumetric effect image that is to be upsampled. The target information may be indicative of one or more coordinates with respect to the initial 2D volumetric effect image. For example, the target information may be indicative of coordinates for specifying one or more 2D image regions with respect to the initial 2D volumetric effect image so that image resolution is increased by the ML model for the one or more 2D image regions. In some examples, the target information may be indicative of a respective coordinate and a distance (e.g. radial distance) for defining an image portion. Moreover, the target information may in some cases be generated in dependence on gaze tracking information and may define an image portion corresponding to a user's foveal region.

Alternatively or in addition, the additional input (e.g. target information) may be generated in dependence on a position of an object in a virtual scene. A game engine or the super resolution circuitry 320 may use information regarding a position of a virtual object in a virtual scene to generate the target information. Hence, in some embodiments of the disclosure, the super resolution circuitry 320 is configured to input target information indicative of an image portion for the initial 2D volumetric effect image, the image portion corresponding to a position of at least one virtual object in the virtual scene. The target information may be indicative of one or more coordinates.

In this way, the machine learning model can increase image resolution for a portion of the initial 2D volumetric effect image which is expected to correspond to a portion of a display image including a virtual object in the virtual scene. In this way, the quality of the volumetric effect in the resulting display image can be enhanced for the image portion of the display image including the virtual object.

In some embodiments of the disclosure, the additional input may comprise at least one of a depth image for the virtual scene and a display image for the virtual scene. The super resolution circuitry 320 may input at least one of a depth image for the virtual scene and a display image for the virtual scene to the machine learning model 520. A depth image may be generated by a rendering pipeline (such as the pipeline 200). A depth image including depth information for the virtual scene may be input to the ML model. This can serve to guide the ML model to target one or more portions of an initial 2D volumetric effect image for increasing image resolution. For example, the depth image may be useful for indicating locations of edges for virtual objects in the virtual scene. Using the depth image, locations of virtual objects and/or surface boundaries for such objects can be identified and one or more portions of the initial 2D volumetric effect image can be targeted for super resolution for enhancing quality for these parts of the virtual scene in the resulting display image.

Alternatively or in addition to using a depth image, a display image generated by the image processing circuitry 330 may be input to the ML model 520 for providing information for the virtual scene. In particular, a previous display image may be input to the ML model for use in upsampling an 2D volumetric effect image to be used by the image processing circuitry 230 for generating a next display image. It can be assumed that use of a previous display image can provide information for locations of virtual objects and/or surface boundaries with sufficient accuracy. For example, it can be expected that positions of objects may not change (or may change very little) between one frame and the next frame and thus a previous display image may be used as input to the ML model 520 for providing guidance as to one or more image portions to be targeted for image super resolution.

In some embodiments of the disclosure, the additional input (e.g. target information, depth image, display image etc.) may be a time varying signal so that one or more target regions can be specified for a given initial 2D volumetric effect image and one or more different target regions having different positions can be specified for another (e.g. next) initial 2D volumetric effect image. The content depicted in the display images generated by the image processing circuitry 330 may vary due to changes in position and/or orientation of a virtual viewpoint associated with the display image and/or movement of parts of the virtual scene (e.g. virtual objects moving within the virtual scene). Hence, the additional input may be a time varying signal to allow super resolution to be targeted to different parts of an initial 2D volumetric effect image for different times. For example, display images may be sequentially generated and a sequence of display image (or depth images) may be input to the ML model 520 for allowing image portions targeted for image super resolution to be varied with respect to time.

The image processing circuitry 330 can generate a sequence of display images according to any suitable frame rate. The sampling circuitry 310 may sample the volumetric effect data and generate a sequence of initial 2D volumetric effect images according to a frame rate that is less than or equal to a frame rate for the display images. Hence, in some examples the sampling circuitry 310 may generate a sequence of initial 2D volumetric effect images according to a first frame rate, the super resolution circuitry 320 may generate a sequence of higher resolution 2D volumetric effect images according to the first frame rate (i.e. a 1:1 correspondence for an initial 2D volumetric effect image and a higher resolution 2D volumetric effect image), and the image processing circuitry 330 may generate a sequence of display images according to a second frame rate. The first frame rate and the second frame rate may be the same (e.g. 60 Hz). Alternatively, the first frame rate may be less than the second frame rate such that a same respective higher resolution 2D volumetric effect image may be used for generating two or more display images.

Referring now to Figure 6, in some embodiments of the disclosure a data processing apparatus 600 comprises the sampling circuitry 310, the super resolution circuitry 320, the image processing circuitry 330 (which have been discussed above and are the same as described with reference to Figure 3) and also simulation circuitry 340. The simulation circuitry 340 is configured to generate the volumetric effect data for the virtual scene. Hence, Figure 6 illustrates a data processing apparatus 600 generates the volumetric effect data for the virtual scene. The simulation circuitry 340 may simulate a volumetric effect data such as volumetric fog effect data as a temporal and spatial simulation. The simulation may be performed for a portion of a virtual scene currently within a field of view of a virtual camera. A real-time fluid dynamics simulation may be computed for simulating interaction of fluid with parts of a virtual scene. For example, any of the fluid simulations supported by the Unreal ^{®} game engine or Unity^{®} game engine may be used.

Still referring to Figure 6, the sampling circuitry 310 is configured to periodically sample the volumetric effect data generated by the simulation circuitry 340, and generate a sequence of initial 2D volumetric effect images according to a given frame rate. The super resolution circuitry 320 is configured to generate a corresponding sequence of higher resolution 2D volumetric effect images using the machine learning model. The corresponding sequence of higher resolution 2D volumetric effect images is generated according to the given frame rate for use by the image processing circuitry 330.

In some embodiments of the disclosure, a machine learning model (e.g. ML model 510 or ML model 520) has been trained using training data comprising pairs of lower resolution and higher resolution 2D volumetric effect images to learn a set of parameters for mapping a lower resolution 2D volumetric effect image to a higher resolution 2D volumetric effect image.

An image pair consisting of a lower resolution 2D volumetric effect image (e.g. a 64x64 volumetric fog effect image) and a corresponding higher resolution 2D volumetric effect image (e.g. a 256x256, 512x512 or 1024x1024 volumetric fog effect image) can be generated according to any of the techniques to be discussed below for use as a pair of training images. A machine learning model can be trained using such image pairs to learn a set of parameters for mapping a lower resolution image to the corresponding higher resolution image. Backpropagation training techniques may be used in which higher resolution 2D volumetric effect images are used as ground truth data.

A backpropagation training method may comprise: inputting a lower resolution image of a training image pair to the machine learning model; generating by the machine learning model an output image of higher image resolution; calculating error information according to differences between the output image and the higher resolution image of the training image pair; and updating parameters for the machine learning model in dependence on the error information. These steps may be repeated until a certain training condition is met. For example, the training condition may be met in response to the error information being indicative of a difference between an output image and the higher resolution image that is less than a threshold, and/or in response to a change in the error information between successive iterations and/or over a predetermined period of time being less than a threshold. More generally, the steps of the training method can be repeated to achieve convergence towards a set of learned parameters for mapping a lower resolution 2D volumetric effect image to the corresponding higher resolution 2D volumetric effect image. Backpropagation training is generally known and not discussed in more detail.

The data processing apparatus 300 or 600 may be operable to generate training data comprising pairs of lower and higher resolution 2D volumetric effect images. It will be appreciated that the training data may be generated separately to subsequent training of a machine learning model using that training data and also separately to subsequent use of the trained machine learning model.

Figure 7 schematically illustrates a method 700 for generating training data for training a machine learning model to learn to generate a higher resolution 2D volumetric effect image for an initial 2D volumetric effect image of lower image resolution than the higher resolution 2D volumetric effect image. The method comprises:
sampling (at a step 710) computer-generated volumetric effect data for a virtual scene using a first sampling resolution;
generating (at a step 720) a first 2D volumetric effect image in dependence on a first set of sampling results obtained for the sampling of the computer-generated volumetric effect data using the first sampling resolution;
sampling (at a step 730) the volumetric effect data for the virtual scene using a second sampling resolution;
generating (at a step 740) a second 2D volumetric effect image in dependence on a second set of sampling results obtained for the sampling of the computer-generated volumetric effect data using the second sampling resolution, wherein the second sampling resolution has a higher resolution than the first sampling resolution and the second 2D volumetric effect image has a higher image resolution than the first 2D volumetric effect image; and
storing (at a step 750) the first 2D volumetric effect image and the second 2D volumetric effect image.

In the method of Figure 7, the first and second sampling steps may be performed using two 3D voxel grids of different resolution or may be performed using two froxel grids of different resolution. For the second sampling resolution, a voxel grid or froxel grid such as 640x390x128 or 512x512x128 may be used, for example. More generally, the second sampling resolution can be set as desired for allowing the second 2D volumetric effect image to be generated with a suitable image resolution such that the second 2D volumetric effect image can be used as ground truth data for training a machine learning model.

The first and second sampling steps may be performed in parallel. Alternatively, the volumetric effect data may firstly be sampled periodically using the first sampling resolution to obtain a sequence of first 2D volumetric effect images, and then the technique may be repeated so that the volumetric effect data is re-sampled periodically using the second sampling resolution to obtain a sequence of second 2D volumetric effect images. For example, a rendering pipeline may firstly run and the steps 710 and 720 performed, and the rendering pipeline may subsequently re-run and the steps 730 and 740 performed. The rendering pipeline can proceed deterministically so that when re-run the only difference may be the use of the second sampling resolution. Hence, a same simulation of volumetric effect data may be re-run and the same data may be sampled with a different sampling resolution. In this way, a first sequence of lower resolution 2D volumetric effect images and a second sequence of higher resolution 2D volumetric effect images may be obtained.

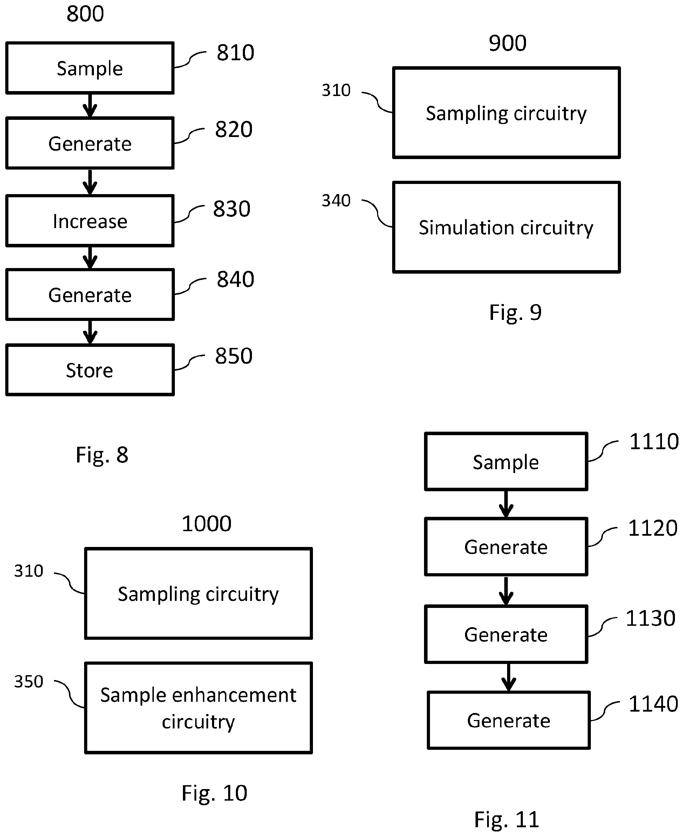

Figure 8 schematically illustrates another method 800 for generating training data for training a machine learning model to learn to generate a higher resolution 2D volumetric effect image for an initial 2D volumetric effect image of lower image resolution than the higher resolution 2D volumetric effect image. The method comprises:
sampling (at a step 810) computer-generated volumetric effect data for a virtual scene using a first sampling resolution;
generating (at a step 820) a first 2D volumetric effect image in dependence on a first set of sampling results obtained using the first sampling resolution;
increasing (at a step 830) a resolution of the first set of sampling results and thereby obtaining a second set of sampling results having a higher sampling resolution;
generating (at a step 840) a second 2D volumetric effect image in dependence on the second set of sampling results, the second 2D volumetric effect image having a higher image resolution than the first 2D volumetric effect image; and
storing (at a step 850) the first 2D volumetric effect image and the second 2D volumetric effect image.

Whereas the method 700 uses two sampling steps of different sampling resolution, in the method 800 a single sampling step may be performed. The set of sampling results can be obtained by sampling the volumetric effect data using a first sampling resolution (which may be the same as the first sampling resolution discussed above with respect to the method 700 in Figure 7). Hence, a relatively low resolution sampling may be used at the step 810. At the step 830, a resolution of the set of sampling results is increased. The set of sampling results is a set of 3D results obtained by sampling the volumetric effect data using one of a voxel grid (e.g. with voxels each of a same size and shape) and a froxel grid. The step 830 may comprise performing interpolation (e.g. bicubic interpolation) for the set of sampling results to obtain another set of sampling results having a greater resolution. Bicubic interpolation may be performed for the sampling results for each 2D depth slice of the voxel grid or froxel grid to increase the resolution for each 2D depth slice. The resulting depth slices can be used to generate the second 2D volumetric effect image in the same manner discussed previously with respect to Figure 4. In some examples, a machine learning model may be used at the step 830 for increasing the resolution of the first set of sampling results. This is discussed in more detail below with respect to Figure 10.

A data processing apparatus comprising at least the sampling circuitry 310 (which has been discussed with respect to Figures 3 and 6) is suitable for performing the method 700 in Figure 7. Referring to Figure 9, in some embodiments of the disclosure a data processing apparatus 900 for generating training data for training a machine learning model to learn to generate a higher resolution 2D volumetric effect image for an initial 2D volumetric effect image of lower image resolution than the higher resolution 2D volumetric effect image comprises the sampling circuitry 310 to:
sample computer-generated volumetric effect data for a virtual scene using a first sampling resolution and generate a first 2D volumetric effect image in dependence on a first set of sampling results obtained for the computer-generated volumetric effect data using the first sampling resolution;
sample the volumetric effect data for the virtual scene using a second sampling resolution and generate a second 2D volumetric effect image in dependence on a second set of sampling results obtained for the computer-generated volumetric effect data using the second sampling resolution, wherein the second sampling resolution has a higher resolution than the first sampling resolution and the second 2D volumetric effect image has a higher image resolution than the first 2D volumetric effect image; and
store the first 2D volumetric effect image and the second 2D volumetric effect image to storage circuitry.

The data processing apparatus 900 optionally comprises the simulation circuitry 340 for generating the generated volumetric effect data. Alternatively, the volumetric effect data may be pre-generated and may be stored by the data processing apparatus for use by the sampling circuitry 310 to obtain the sampling results. The storage circuitry may be provided as part of the data processing apparatus 900 and/or as part of another data processing apparatus connected via one or more of a wired and/or wireless communication. The data processing apparatus 900 is thus suitable for performing the method 700 in Figure 7.

Figure 10 schematically illustrates a data processing apparatus 1000 suitable for performing the method 800 in Figure 8. The data processing apparatus 1000 comprises the sampling circuitry 310 and sample enhancement circuitry 350. The data processing apparatus 1000 comprises:
sampling circuitry 310 to sample computer-generated volumetric effect data for a virtual scene using a first sampling resolution and generate a first 2D volumetric effect image in dependence on a first set of sampling results obtained using the first sampling resolution; and
sample enhancement circuitry 350 to increase a resolution of the first set of sampling results and obtain a second set of sampling results having a higher sampling resolution, wherein the sampling circuitry 310 is configured to generate a second 2D volumetric effect image in dependence on the second set of sampling results, the second 2D volumetric effect image having a higher image resolution than the first 2D volumetric effect image, and wherein the data processing apparatus is configured to store the first 2D volumetric effect image and the second 2D volumetric effect image to storage circuitry.

In some examples, the sample enhancement circuitry 350 may increase the resolution of the first set of 3D sampling results using interpolation (e.g. bicubic interpolation). As explained previously, bicubic interpolation may be performed for the sampling results for each 2D depth slice of the voxel grid or froxel grid.

In some examples, the sample enhancement circuitry 350 may increase the resolution of the first set of 3D sampling results using machine learning techniques. The sample enhancement circuitry 350 may input the first set of 3D sampling results obtained using the first sampling resolution to a machine learning model that has been trained to map a set of lower resolution 3D sampling results to a set of higher resolution 3D sampling results. The machine learning model may have been trained using training data comprising pairs of lower resolution and higher resolution sets of 3D sampling results to learn a set of parameters for mapping a set of lower resolution 3D sampling results to a set of higher resolution 3D sampling results. Such training data may be obtained using the method 700 in Figure 7, for example. For example, a rendering pipeline may be run using a first sampling resolution and then re-run with the difference being that a second sampling resolution is instead used. In this way, a voxel grid (or froxel grid) with a first sampling resolution can be used to obtain a first set of 3D sampling results and another voxel grid (or froxel grid) with greater spatial resolution can be used to obtain a second set of 3D sampling results with a higher spatial resolution.

A lower resolution voxel grid (or froxel grid) having a resolution of WxHxD (where W, H and D represent a number of voxels in the width, height and depth axes, respectively) may be used to obtain the first set of sampling results. A higher resolution voxel grid (or froxel grid) having a greater number of voxels (or frustum voxels) is used to obtain the second set of sampling results. A higher resolution voxel grid (or froxel grid) has a greater number of respective voxels (or frustum voxels) for a same given 3D space such that voxels (or frustum voxels) of a smaller size are used for the higher resolution sampling. For example, a number of depth slices may remain the same for the lower resolution and higher resolution sampling, whilst a larger number of voxels (or frustum voxels) may be used for each depth slice. Optionally, the number of depth slices may also vary. In one example, a lower resolution sampling may use a voxel grid (or froxel grid) of 160x90x128 and a higher resolution sampling may use a voxel grid (or froxel grid) of 640x360x128. Hence, a set of lower resolution sampling results may potentially have a data size of approximately 14 MB whereas a set of higher resolution sampling results may potentially have a data size of approximately 250MB.

The machine learning model may be trained using pairs of lower resolution and higher resolution sets of 3D sampling results, in which the higher resolution sets of 3D sampling results may be used as ground truth data. In this way, the first set of sampling results obtained by the sampling circuitry 310 can be input to the machine learning model to increase a resolution of the first set of sampling results to a target resolution corresponding to that of the ground truth data.

In some examples, an existing rendering pipeline for a game engine may be used to obtain the training data comprising the pairs of lower resolution and higher resolution sets of 3D sampling results. As explained above, some existing rendering pipelines may blend sampling results for one or more (e.g. ten) previous frames with the sampling results for a given frame and this may sometimes present difficulties in accessing a set of sampling results for a respective frame. Hence, in some cases the rendering pipeline can be run and a game state can be frozen (locked) for a period of time whilst frame rendering continues. In this way, the rendering proceeds to repeatedly render image frames for the same game state (deterministically) and the voxel grid (or froxel grid) sampling is repeated for each frame so that the obtained sampling results are the same (or substantially the same) and the temporal blending effect can be removed.

The data processing apparatus 1000 may optionally comprise the simulation circuitry 340 for generating the generated volumetric effect data. Alternatively, the volumetric effect data may be pre-generated and may be stored by the data processing apparatus for use by the sampling circuitry 310 to obtain the sampling results. The storage circuitry may be provided as part of the data processing apparatus 1000 and/or as part of another data processing apparatus connected via one or more of a wired and/or wireless communication.

It will be appreciated that the training data may be generated separately to subsequent training of a machine learning model using that training data. Any of the data processing apparatus 900 and the data processing apparatus 1000 may comprise training circuitry to train a machine learning model using the training data (not shown in Figure 9 or Figure 10). Alternatively, a respective training data processing apparatus may be provided which comprises the training circuitry and which is operable to use the training data generated by any of the apparatus 900 and the apparatus 1000. The training circuitry can be configured to: provide a first 2D volumetric effect image (e.g. generated at the step 720 or 820) as input to the machine learning model; provide the second 2D volumetric effect image (e.g. generated at the step 740 or 840) as ground truth data to the machine learning model; and update the machine learning model responsive to a difference between an output 2D volumetric effect image generated by the machine learning model and the second 2D volumetric effect.

Figure 11 is a schematic flowchart illustrating a method in accordance with embodiments of the disclosure. The method comprises:
sampling (at a step 1110) computer-generated volumetric effect data for a virtual scene;
generating (at a step 1120) an initial 2D volumetric effect image in dependence on a set of sampling results obtained for the computer-generated volumetric effect data;
generating (at a step 1130) a higher resolution 2D volumetric effect image in dependence on the initial 2D volumetric effect image, wherein generating the higher resolution 2D volumetric effect image comprises inputting the initial 2D volumetric effect image to a machine learning model trained for performing image super-resolution for the initial 2D volumetric effect image; and
generating (at a step 1130) one or more display images for the virtual scene using the higher resolution 2D volumetric effect image.

It will be appreciated that example embodiments can be implemented by computer software operating on a general purpose computing system such as a games machine. In these examples, computer software, which when executed by a computer, causes the computer to carry out any of the methods discussed above is considered as an embodiment of the present disclosure. Similarly, embodiments of the disclosure are provided by a non-transitory, machine-readable storage medium which stores such computer software.

It will also be apparent that numerous modifications and variations of the present disclosure are possible in light of the above teachings. It is therefore to be understood that within the scope of the appended claims, the disclosure may be practised otherwise than as specifically described herein.

### Consistory set of clauses

1. A data processing apparatus comprising:
   sampling circuitry to sample computer-generated volumetric effect data for a virtual scene and generate an initial 2D volumetric effect image in dependence on a set of sampling results obtained for the computer-generated volumetric effect data;
   super resolution circuitry to generate a higher resolution 2D volumetric effect image in dependence on the initial 2D volumetric effect image, wherein the super resolution circuitry is configured to input the initial 2D volumetric effect image to a machine learning model trained for performing image super-resolution, the higher resolution 2D volumetric effect image having a higher image resolution than the initial 2D volumetric effect image; and
   image processing circuity to generate one or more display images for the virtual scene, wherein the image processing circuity is configured to generate one or more of the display images using the higher resolution 2D volumetric effect image.
2. The data processing apparatus according to clause 1, wherein the machine learning model is trained to increase image resolution for one or more portions of the initial 2D volumetric effect image.
3. The data processing apparatus according to clause 2, wherein the machine learning model is trained to increase image resolution for a portion of the initial 2D volumetric effect image in dependence on whether the portion includes pixel data associated with the volumetric effect.
4. The data processing apparatus according to clause 2 or clause 3, wherein the super resolution circuitry is configured to input target information indicative of one or more target image portions to the machine learning model, and wherein the machine learning model is trained to increase image resolution for one or more portions of the initial 2D volumetric effect image in dependence on the target information.
5. The data processing apparatus according to clause 4, wherein the target information is indicative of an image portion for the initial 2D volumetric effect image corresponding to a position of at least one virtual object in the virtual scene.
6. The data processing apparatus according to any one of clauses 2 to 5, wherein the super resolution circuitry is configured to input at least one of a depth image for the virtual scene and a display image for the virtual scene to the machine learning model, and wherein the machine learning model is trained to increase image resolution for one or more portions of the initial 2D volumetric effect image in dependence on at least one of the depth image and the display image.
7. The data processing apparatus according to any preceding clause, wherein the computer-generated volumetric effect data comprises one or more from the list consisting of:
   volumetric fog effect data;
   volumetric smoke effect data;
   volumetric water effect data; and
   volumetric fire effect data.
8. The data processing apparatus according to any preceding clause, wherein the machine learning model has been trained using training data comprising pairs of lower resolution and higher resolution 2D volumetric effect images to learn a set of parameters for mapping a lower resolution 2D volumetric effect image to a higher resolution 2D volumetric effect image.
9. The data processing apparatus according to clause 8, wherein the machine learning model has been trained using the higher resolution 2D volumetric effect images as ground truth data.
10. The data processing apparatus according to any preceding clause, wherein the sampling circuitry is configured to sample the computer-generated volumetric fog using a voxel grid.
11. The data processing apparatus according to clause 10, wherein the voxel grid is a view frustum voxel grid comprising frustum voxels aligned with a virtual camera viewpoint.
12. The data processing apparatus according to any preceding clause, wherein the initial 2D volumetric effect image comprises a first number of pixel values indicative of colour and transparency for respective pixels, and the higher resolution 2D volumetric effect image comprises a second number of pixel values indicative of colour and transparency for respective pixels, the second number of pixel values being greater than the first number of pixel values.
13. The data processing apparatus according to any preceding clause, comprising simulation circuitry to generate the volumetric effect data for the virtual scene, wherein the sampling circuitry is configured to periodically sample the volumetric effect data and generate a sequence of initial 2D volumetric effect images according to a frame rate, and wherein the super resolution circuitry is configured to generate a corresponding sequence of higher resolution 2D volumetric effect images using the machine learning model.
14. A data processing apparatus for generating training data for training a machine learning model to learn to generate a higher resolution 2D volumetric effect image for an initial 2D volumetric effect image of lower image resolution than the higher resolution 2D volumetric effect image, the data processing apparatus comprising:
   sampling circuitry to:
   sample computer-generated volumetric effect data for a virtual scene using a first sampling resolution and generate a first 2D volumetric effect image in dependence on a first set of sampling results obtained for the computer-generated volumetric effect data using the first sampling resolution;
   sample the volumetric effect data for the virtual scene using a second sampling resolution and generate a second 2D volumetric effect image in dependence on a second set of sampling results obtained for the computer-generated volumetric effect data using the second sampling resolution, wherein the second sampling resolution has a higher resolution than the first sampling resolution and the second 2D volumetric effect image has a higher image resolution than the first 2D volumetric effect image; and
   store the first 2D volumetric effect image and the second 2D volumetric effect image to storage circuitry.
15. A data processing apparatus for generating training data for training a machine learning model to learn to generate a higher resolution 2D volumetric effect image for an initial 2D volumetric effect image of lower image resolution than the higher resolution 2D volumetric effect image, the data processing apparatus comprising:
   sampling circuitry to sample computer-generated volumetric effect data for a virtual scene using a first sampling resolution and generate a first 2D volumetric effect image in dependence on a first set of sampling results obtained using the first sampling resolution; and
   sample enhancement circuitry to increase a resolution of the first set of sampling results and obtain a second set of sampling results having a higher sampling resolution, wherein the sampling circuitry is configured to generate a second 2D volumetric effect image in dependence on the second set of sampling results, the second 2D volumetric effect image having a higher image resolution than the first 2D volumetric effect image, and wherein the data processing apparatus is configured to store the first 2D volumetric effect image and the second 2D volumetric effect image to storage circuitry.
16. The data processing apparatus according to clause 14 or clause 15, comprising training circuitry to train the machine learning model, wherein the training circuitry is configured to:
   provide the first 2D volumetric effect image as input to the machine learning model;
   provide the second 2D volumetric effect image as ground truth data to the machine learning model; and
   update the machine learning model responsive to a difference between an output 2D volumetric effect image generated by the machine learning model and the second 2D volumetric effect.
17. A computer implemented method comprising:
   sampling computer-generated volumetric effect data for a virtual scene;
   generating an initial 2D volumetric effect image in dependence on a set of sampling results obtained for the computer-generated volumetric effect data;
   generating a higher resolution 2D volumetric effect image in dependence on the initial 2D volumetric effect image, wherein generating the higher resolution 2D volumetric effect image comprises inputting the initial 2D volumetric effect image to a machine learning model trained for performing image super-resolution for the initial 2D volumetric effect image; and
   generating one or more display images for the virtual scene using the higher resolution 2D volumetric effect image.
18. A computer implemented method for generating training data for training a machine learning model to learn to generate a higher resolution 2D volumetric effect image for an initial 2D volumetric effect image of lower image resolution than the higher resolution 2D volumetric effect image, the method comprising:
   sampling computer-generated volumetric effect data for a virtual scene using a first sampling resolution;
   generating a first 2D volumetric effect image in dependence on a first set of sampling results obtained for the sampling of the computer-generated volumetric effect data using the first sampling resolution;
   sampling the volumetric effect data for the virtual scene using a second sampling resolution;
   generating a second 2D volumetric effect image in dependence on a second set of sampling results obtained for the sampling of the computer-generated volumetric effect data using the second sampling resolution, wherein the second sampling resolution has a higher resolution than the first sampling resolution and the second 2D volumetric effect image has a higher image resolution than the first 2D volumetric effect image; and
   storing the first 2D volumetric effect image and the second 2D volumetric effect image.
19. A computer implemented method for generating training data for training a machine learning model to learn to generate a higher resolution 2D volumetric effect image for an initial 2D volumetric effect image of lower image resolution than the higher resolution 2D volumetric effect image, the method comprising:
   sampling computer-generated volumetric effect data for a virtual scene using a first sampling resolution;
   generating a first 2D volumetric effect image in dependence on a first set of sampling results obtained using the first sampling resolution;
   increasing a resolution of the first set of sampling results and thereby obtaining a second set of sampling results having a higher sampling resolution;
   generating a second 2D volumetric effect image in dependence on the second set of sampling results, the second 2D volumetric effect image having a higher image resolution than the first 2D volumetric effect image; and
   storing the first 2D volumetric effect image and the second 2D volumetric effect image.
20. Computer software which when executed by a computer causes the computer to perform the method according to any one of clauses 17-19.

## Claims

1. A data processing apparatus comprising:
sampling circuitry to sample computer-generated volumetric effect data for a virtual scene and generate an initial 2D volumetric effect image in dependence on a set of sampling results obtained for the computer-generated volumetric effect data;
super resolution circuitry to generate a higher resolution 2D volumetric effect image in dependence on the initial 2D volumetric effect image, wherein the super resolution circuitry is configured to input the initial 2D volumetric effect image to a machine learning model trained for performing image super-resolution, the higher resolution 2D volumetric effect image having a higher image resolution than the initial 2D volumetric effect image; and
image processing circuity to generate one or more display images for the virtual scene, wherein the image processing circuity is configured to generate one or more of the display images using the higher resolution 2D volumetric effect image.

2. The data processing apparatus according to claim 1, wherein the machine learning model is trained to increase image resolution for one or more portions of the initial 2D volumetric effect image.

3. The data processing apparatus according to claim 2, wherein the machine learning model is trained to increase image resolution for a portion of the initial 2D volumetric effect image in dependence on whether the portion includes pixel data associated with the volumetric effect.

4. The data processing apparatus according to claim 2 or claim 3, wherein the super resolution circuitry is configured to input target information indicative of one or more target image portions to the machine learning model, and wherein the machine learning model is trained to increase image resolution for one or more portions of the initial 2D volumetric effect image in dependence on the target information; preferably wherein the target information is indicative of an image portion for the initial 2D volumetric effect image corresponding to a position of at least one virtual object in the virtual scene.

5. The data processing apparatus according to any one of claims 2 to 4, wherein the super resolution circuitry is configured to input at least one of a depth image for the virtual scene and a display image for the virtual scene to the machine learning model, and wherein the machine learning model is trained to increase image resolution for one or more portions of the initial 2D volumetric effect image in dependence on at least one of the depth image and the display image.

6. The data processing apparatus according to any preceding claim, wherein the computer-generated volumetric effect data comprises one or more from the list consisting of:
volumetric fog effect data;
volumetric smoke effect data;
volumetric water effect data; and
volumetric fire effect data.

7. The data processing apparatus according to any preceding claim, wherein the machine learning model has been trained using training data comprising pairs of lower resolution and higher resolution 2D volumetric effect images to learn a set of parameters for mapping a lower resolution 2D volumetric effect image to a higher resolution 2D volumetric effect image; preferably wherein the machine learning model has been trained using the higher resolution 2D volumetric effect images as ground truth data.

8. The data processing apparatus according to any preceding claim, wherein the sampling circuitry is configured to sample the computer-generated volumetric fog using a voxel grid; preferably wherein the voxel grid is a view frustum voxel grid comprising frustum voxels aligned with a virtual camera viewpoint.

9. The data processing apparatus according to any preceding claim, wherein the initial 2D volumetric effect image comprises a first number of pixel values indicative of colour and transparency for respective pixels, and the higher resolution 2D volumetric effect image comprises a second number of pixel values indicative of colour and transparency for respective pixels, the second number of pixel values being greater than the first number of pixel values.

10. The data processing apparatus according to any preceding claim, comprising simulation circuitry to generate the volumetric effect data for the virtual scene, wherein the sampling circuitry is configured to periodically sample the volumetric effect data and generate a sequence of initial 2D volumetric effect images according to a frame rate, and wherein the super resolution circuitry is configured to generate a corresponding sequence of higher resolution 2D volumetric effect images using the machine learning model.

11. A data processing apparatus for generating training data for training a machine learning model to learn to generate a higher resolution 2D volumetric effect image for an initial 2D volumetric effect image of lower image resolution than the higher resolution 2D volumetric effect image, the data processing apparatus comprising:
sampling circuitry to sample computer-generated volumetric effect data for a virtual scene using a first sampling resolution and generate a first 2D volumetric effect image in dependence on a first set of sampling results obtained using the first sampling resolution; and
sample enhancement circuitry to increase a resolution of the first set of sampling results and obtain a second set of sampling results having a higher sampling resolution, wherein the sampling circuitry is configured to generate a second 2D volumetric effect image in dependence on the second set of sampling results, the second 2D volumetric effect image having a higher image resolution than the first 2D volumetric effect image, and wherein the data processing apparatus is configured to store the first 2D volumetric effect image and the second 2D volumetric effect image to storage circuitry.

12. The data processing apparatus according to claim 11, comprising training circuitry to train the machine learning model, wherein the training circuitry is configured to:
provide the first 2D volumetric effect image as input to the machine learning model;
provide the second 2D volumetric effect image as ground truth data to the machine learning model; and
update the machine learning model responsive to a difference between an output 2D volumetric effect image generated by the machine learning model and the second 2D volumetric effect.

13. A computer implemented method comprising:
sampling computer-generated volumetric effect data for a virtual scene;
generating an initial 2D volumetric effect image in dependence on a set of sampling results obtained for the computer-generated volumetric effect data;
generating a higher resolution 2D volumetric effect image in dependence on the initial 2D volumetric effect image, wherein generating the higher resolution 2D volumetric effect image comprises inputting the initial 2D volumetric effect image to a machine learning model trained for performing image super-resolution for the initial 2D volumetric effect image; and
generating one or more display images for the virtual scene using the higher resolution 2D volumetric effect image.

14. A computer implemented method for generating training data for training a machine learning model to learn to generate a higher resolution 2D volumetric effect image for an initial 2D volumetric effect image of lower image resolution than the higher resolution 2D volumetric effect image, the method comprising:
sampling computer-generated volumetric effect data for a virtual scene using a first sampling resolution;
generating a first 2D volumetric effect image in dependence on a first set of sampling results obtained using the first sampling resolution;
increasing a resolution of the first set of sampling results and thereby obtaining a second set of sampling results having a higher sampling resolution;
generating a second 2D volumetric effect image in dependence on the second set of sampling results, the second 2D volumetric effect image having a higher image resolution than the first 2D volumetric effect image; and
storing the first 2D volumetric effect image and the second 2D volumetric effect image.

15. Computer software which when executed by a computer causes the computer to perform the method according to claim 13 or claim 14.
